# EUROPÄISCHE PATENTANMELDUNG

(11) **EP 4 369 865 A1**
(43) Veröffentlichungstag der Anmeldung: **15.05.2024**
(21) Anmeldenummer: 22206132.7
(22) Anmeldetag: 08.11.2022
(51) Int. Cl.: H05B 45/14, H05B 45/375, H05B 45/46

(54) **LEUCHTVORRICHTUNG**

(71) Anmelder: ZKW Group GmbH, 3250 Wieselburg (AT)
(72) Erfinder: Graf, Harald, 2732 Würflach (AT)
(74) Vertreter: Patentanwaltskanzlei Matschnig & Forsthuber OG

(57) **Zusammenfassung**

Die Erfindung betrifft eine Leuchtvorrichtung (1), umfassend
- einen Multi-LED-Chip (2), wobei der Multi-LED-Chip (2) eine Anzahl an LED-Lichtquellen (2') sowie eine Anzahl an Regelelementen (2") aufweist, wobei jeder LED-Lichtquelle (2') ein in Serie geschaltetes Regelelement (2") zur Regelung der Stromaufnahme der jeweiligen LED-Lichtquelle (2') zugeordnet ist und gemeinsam mit dem Regelelement (2") einen regelbaren Strang (2a, 2b, 2c) bildet, wobei jede LED-Lichtquelle (2') einzeln schaltbar ausgebildet ist, und
- eine elektrische Steuereinheit (3), die
*einen Abwärtswandler (3a) mit einem Spannungseingang (3aVin), einem Feedbackeingang (3aFB) sowie einem Spannungsausgang (3aVout) sowie
*einen Mikrokontroller (3b) mit einem Signaleingang (3bSin) und einem Signalausgang (3bSout) aufweist.

## Beschreibung

Die Erfindung betrifft eine Leuchtvorrichtung, umfassend einen Multi-LED-Chip, wobei der Multi-LED-Chip eine Anzahl an LED-Lichtquellen sowie eine Anzahl an Regelelementen aufweist, wobei jeder LED-Lichtquelle ein in Serie geschaltetes Regelelement zur Regelung der Stromaufnahme der jeweiligen LED-Lichtquelle zugeordnet ist und gemeinsam mit dem Regelelement einen regelbaren Strang bildet, wobei jede LED-Lichtquelle einzeln schaltbar ausgebildet ist, eine elektrische Steuereinheit, die einen Abwärtswandler mit einem Spannungseingang, einem Feedbackeingang sowie einem Spannungsausgang sowie einen Mikrokontroller mit einem Signaleingang und einem Signalausgang aufweist, wobei der Abwärtswandler dazu eingerichtet ist, eine an dem Spannungseingang anliegende Eingangsgleichspannung in eine niedrigere Ausgangsgleichspannung umzuwandeln und über den Spannungsausgang auszugeben, wobei der Spannungsausgang zur elektrischen Versorgung der Stränge des Multi-LED-Chips mit dem Multi-LED-Chip verbunden ist, wobei der Spannungswert der Ausgangsgleichspannung durch eine Feedbackschleife festgelegt wird, bei der ein Spannungsanteil der Ausgangsgleichspannung an den Feedbackeingang rückgeführt wird und sich die Ausgangsgleichspannung in Abhängigkeit von dem rückgeführten Spannungsanteil einstellt, wobei der Mikrokontroller dazu eingerichtet ist, über den Signaleingang ein Eingangssignal zu empfangen und in ein Ausgangssignal umzuwandeln, mit welchem Ausgangssignal das durch den Multi-LED-Chip abzustrahlende Lichtbild vorgebbar ist, wobei jedes abzustrahlende Lichtbild mit einer Konfiguration an Regelzuständen der Stränge korreliert und wobei der Signalausgang zur Übertragung des Ausgangssignals mit dem Multi-LED-Chip verbunden ist.

Leuchtvorrichtungen dieser Art werden nach und nach vermehrt eingesetzt. Um den korrekten Betrieb der Leuchtvorrichtung sicherzustellen war es bisher üblich, einfach die für die jeweiligen Komponenten der Leuchtvorrichtung vorgesehene Betriebsspannung fest einzustellen, und zwar so, dass diese dazu ausreicht, sämtliche Betriebsmodi der Leuchtvorrichtung ausreichend versorgen zu können. Effizienzsteigerungen solcher Leuchtvorrichtungen wurden bisher durch die Auswahl der eingesetzten Komponenten, den Wirkungsgrad der Lichtquellen sowie der nachgeschalteten Optiken und durch Optimierung der Ausnutzung des abgestrahlten Lichtes erzielt. Eine Aufgabe der Erfindung besteht darin, die Effizienz von solchen Leuchtvorrichtungen weiter zu verbessern.

Diese Aufgabe wird mit einer Leuchtvorrichtung eingangs genannter Art gelöst, bei der erfindungsgemäß der Multi-LED-Chip weiters dazu eingerichtet ist, für jedes Lichtbild die dazu passenden Regelzustände der Stränge abzuleiten und dabei zwischen zu aktivierenden und nicht zu aktivierenden Strängen zu unterscheiden, aus den für jedes Lichtbild abgeleiteten Regelzuständen unter Berücksichtigung der Spannungsverluste der Regelelemente für jeden zu aktivierenden Strang eine erforderliche Mindestbetriebsspannung zu berechnen und durch Vergleich der Mindestbetriebsspannungen der zu aktivierenden Stränge für jedes Lichtbild die höchste Mindestbetriebsspannung zu ermitteln und als Sollbetriebsspannung für das betreffende Lichtbild festzulegen und diese Sollbetriebsspannung an den Mikrokontroller zu kommunizieren, wobei der Mikrokontroller dazu eingerichtet ist, in Abhängigkeit von der durch den Multi-LED-Chip kommunizierten Sollbetriebsspannung die Spannungsrückfuhr des Spannungsanteils in den Feedbackeingang dergestalt zu manipulieren, dass lediglich die Sollbetriebsspannung als Ausgangsspannung an den Spannungsausgang ausgegeben wird. Die Anzahl der Stränge beträgt zumindest zwei, in der Praxis kann diese aber deutlich höher liegen und z.B. eine beliebige natürliche Zahl zwischen 2 und 500 betragen, insbesondere zwischen 30 und 100. Die konkrete Anzahl der Stränge hängt davon ab, welche Auflösung durch die jeweilige Leuchtvorrichtung erzielt werden soll, wobei jeder Strang zumindest ein Pixel eines abgestrahlten Lichtbildes repräsentiert. Für eine vereinfachte Ansteuerung der einzelnen LED-Lichtquellen kann die Anzahl der Stränge auch eine Vielzahl von 2^n betragen, wobei n der Anzahl der Stellen einer Binärzahl entspricht. Durch die Erfindung wird die Betriebsspannung des Multi-LED-Chips variabel an die Erfordernisse des Multi-LED-Chips bzw. der abzustrahlenden Lichtverteilung angepasst. Auf diese Weise ist es möglich, lediglich die für den Betrieb notwendige Spannung zu liefern und überschüssige Spannungsanteile zu vermeiden, die anderenfalls in dem Multi-LED-Chip als Verlustspannung anfallen würden bzw. durch Regelkomponenten des Multi-LED-Chips gezielt weggeregelt (und damit in Verlustwärme gewandelt) werden würden. Auf diese Weise wird eine verbesserte Effizienz der Leuchtvorrichtung erzielt.

Bei dem Regelelement kann es sich z.B. um einen Linearregler handeln, dessen Widerstandswert einstellbar ist. Alternativ dazu ist auch ein Schalter und/oder eine Kombination von Schaltern mit widerstandsbehafteten Bauteilen denkbar (ev. durch einen Transistor ausgebildet). Insbesondere kann vorgesehen sein, dass der Mikrokontroller zur Manipulation der Spannungsrückfuhr des Spannungsanteils in den Feedbackeingang mit einem durch den Mikrokontroller schaltbaren Widerstandsnetzwerk verbunden ist, wobei das schaltbare Widerstandsnetzwerk mit dem Feedbackeingang und somit mit der Spannungsrückfuhr des Spannungsanteils verbunden ist. Auf diese Weise wird eine besonders robuste und kostengünstige Möglichkeit zur Manipulation der Spannungsrückfuhr sowie der daraus folgenden Spannungsausgabe geschaffen. Vorteilhafterweise kann vorgesehen sein, dass das Widerstandsnetzwerk als R2R-Netzwerk ausgebildet ist. Insbesondere kann vorgesehen sein, dass das R2R-Netzwerk vier Schaltstufen aufweist, die jeweils mit dem Mikrokontroller zur Steuerung der Schaltstufen verbunden sind. Dadurch lassen sich bereits 16 verschiedene Schaltzustände und hierzu korrespondierende Ausgangsspannungen realisieren.

Weiters kann vorgesehen sein, dass die Ausgangsspannung über einen Spannungsteiler zu dem Feedbackeingang rückgeführt ist. Diese Art der Rückfuhr ist besonders robust und kostengünstig. Dabei kann vorgesehen sein, dass der Spannungsteiler gegen Masse geschaltet ist und das Widerstandsnetzwerk an einem Knotenpunkt zwischen den Widerständen des Spannungsteilers angreift und ebenso gegen Masse geschaltet ist.

Weiters kann vorgesehen sein, dass die Leuchtvorrichtung weiters einen anwendungsspezifischen IC aufweist, wobei dieser anwendungsspezifische IC mit dem Signalausgang des Mikrokontrollers verbunden ist und zur Umwandlung des Ausgangssignals in Steuersignale zur Ansteuerung der LED-Lichtquellen des Multi-LED-Chips eingerichtet ist.

Insbesondere kann vorgesehen sein, dass die Ausgangsspannung zwischen 3V und 5V, insbesondere zwischen 3,5V und 4,5V, beträgt.

Weiters kann vorgesehen sein, dass das Eingangssignal Information über aktuelle sowie über das nachfolgend abzustrahlende Lichtbild enthält und basierend darauf vorab die zugehörige Sollbetriebsspannung des nachfolgenden Lichtbilds abgeleitet wird, um durch den Mikrokontroller bereits unmittelbar zu dem Zeitpunkt des Wechsels auf das nachfolgende Lichtbild die diesem Lichtbild passende Sollbetriebsspannung vorzugeben. Dadurch können zeitliche Delays minimiert werden, insbesondere etwaig erforderliche Nachregelungen in der Abstrahlung, wenn z.B. das nachfolgende Lichtbild eine höhere Sollbetriebsspannung verlangt und im Übergang ansonsten noch kurzfristig noch die zu geringe Sollbetriebsspannung des vorhergehenden Lichtbilds anliegen würde, bis die höhere Sollbetriebsspannung eingestellt wird.

Insbesondere kann vorgesehen sein, dass der Mikrokontroller dazu eingerichtet ist, die für wiederkehrende Lichtbilder durch den Multi-LED-Chip vorgegebenen Sollspannungswerte abzuspeichern und den zu einer Vorgabe eines Lichtbildes entsprechenden abgespeicherten Sollspannungswert vorab einzustellen und beizubehalten, bis ein anderes Lichtbild vorgegeben wird oder durch den Multi-LED-Chip ein von den abgespeicherten Sollspannungswert abweichender Sollspannungswert für das betreffende Lichtbild ausgegeben wird. Danach wird der gespeicherte Wert überschrieben und der geänderte Sollwert übernommen. Zum Abruf der gespeicherten Sollspannungswerte kann z.B. eine Lookup-Tabelle verwendet werden. Ergänzend oder alternativ dazu können die Sollspannungswerte auch über eine Kalkulation ermittelbar sein.

Bei den wiederkehrenden Lichtbildern, zu denen die Sollspannungswerte abgespeichert werden, kann es sich z.B. um die x häufigsten Lichtbilder bzw. die diesen Lichtbildern zugeordneten Lichtfunktionen handeln, wobei x eine natürliche Zahl ist und z.B. zwischen 3 und 20 betragen kann. Bei den Funktionen kann es sich z.B. um eine Abblendlichtfunktion, Fernlichtfunktion, Parklichtfunktion, Kurvenlichtfunktion, etc. handeln.

Weiters betrifft die Erfindung einen Kraftfahrzeugscheinwerfer, umfassend eine erfindungsgemäße Leuchtvorrichtung.

Ebenso betrifft die Erfindung ein Kraftfahrzeug, umfassend eine erfindungsgemäße Leuchtvorrichtung und/oder einen erfindungsgemäßen Kraftfahrzeugscheinwerfer.

Weiters betrifft die Erfindung ein Verfahren zum energieeffizienten Betrieb einer Leuchtvorrichtung, wobei die Leuchtvorrichtung folgendes umfasst: Einen Multi-LED-Chip, wobei der Multi-LED-Chip eine Anzahl an LED-Lichtquellen sowie eine Anzahl an Regelelementen aufweist, wobei jeder LED-Lichtquelle ein in Serie geschaltetes Regelelement zur Regelung der Stromaufnahme der jeweiligen LED-Lichtquelle zugeordnet ist und gemeinsam mit dem Regelelement einen regelbaren Strang bildet, wobei jede LED-Lichtquelle einzeln schaltbar ausgebildet ist, eine elektrische Steuereinheit, die einen Abwärtswandler mit einem Spannungseingang, einem Feedbackeingang sowie einem Spannungsausgang sowie einen Mikrokontroller mit einem Signaleingang und einem Signalausgang aufweist, wobei der Abwärtswandler dazu eingerichtet ist, eine an dem Spannungseingang anliegende Eingangsgleichspannung in eine niedrigere Ausgangsgleichspannung umzuwandeln und über den Spannungsausgang auszugeben, wobei der Spannungsausgang zur elektrischen Versorgung der Stränge des Multi-LED-Chips mit dem Multi-LED-Chip verbunden ist, wobei der Spannungswert der Ausgangsgleichspannung durch eine Feedbackschleife festgelegt wird, bei der ein Spannungsanteil der Ausgangsgleichspannung an den Feedbackeingang rückgeführt wird und sich die Ausgangsgleichspannung in Abhängigkeit von dem rückgeführten Spannungsanteil einstellt, wobei der Mikrokontroller dazu eingerichtet ist, über den Signaleingang ein Eingangssignal zu empfangen und in ein Ausgangssignal umzuwandeln, mit welchem Ausgangssignal das durch den Multi-LED-Chip abzustrahlende Lichtbild vorgebbar ist, wobei jedes abzustrahlende Lichtbild mit einer Konfiguration an Regelzuständen der Stränge korreliert und wobei der Signalausgang zur Übertragung des Ausgangssignals mit dem Multi-LED-Chip verbunden ist, wobei das Verfahren die folgenden Schritte umfasst: a) Empfang eines Ausgangssignals durch den Multi-LED-Chip, b) Ableiten des jeweilig abzustrahlenden Lichtbildes aus dem Ausgangssignal und Berechnen der dazu passenden Regelzustände der Stränge, c) Berechnen auf Basis der in Schritt b) ermittelten Regelzustände einer für jeden Strang erforderlichen Mindestbetriebsspannung unter Berücksichtigung der Spannungsverluste der Regelelemente, d) Ermitteln der Sollbetriebsspannung durch Feststellen der höchsten der Mindestbetriebsspannungen der Stränge, e) Kommunizieren der Sollbetriebsspannung an den Mikrokontroller, f) Manipulieren der Spannungsrückfuhr des Spannungsanteils in den Feedbackeingang durch den Mikrokontroller in Abhängigkeit von der kommunizierten Sollbetriebsspannung, sodass lediglich die Sollbetriebsspannung als Ausgangsspannung an den Spannungsausgang ausgegeben wird.

Sämtliche technische Merkmale der in diesem Dokument beschriebenen Leuchtvorrichtungen können natürlich auch in dem genannten Verfahren implementiert werden und umgekehrt.

Die Erfindung ist im Folgenden anhand beispielhafter und nicht einschränkender Ausführungsformen näher erläutert, die in den Figuren veranschaulicht sind. Darin zeigt
Figur 1 eine Darstellung einer beispielhaften Ausführungsform einer erfindungsgemäßen Leuchtvorrichtung,
Figur 2 eine schematische Darstellung eines beispielhaften Abwärtswandlers, der in der vorliegenden Erfindung einsetzbar ist,
Figur 3a und 3b beispielhafte Lichtbilder, die durch die Leuchtvorrichtung erzeugbar sind,
Figur 4 eine beispielhafte Ausführungsform der Erfindung mit einem R2R-Netzwerk,
Figur 5 eine detaillierte Darstellung eines R2R-Netzwerks mit vier Schaltstufen, inkl. Andeutung der Anbindung an die Ausführungsform gemäß Fig. 4,
Figur 6 beispielhafte Ausgangsspannungen für unterschiedliche Schaltzustände der Schaltstufen nach Fig. 5,

In den folgenden Figuren bezeichnen - sofern nicht anders angegeben - gleiche Bezugszeichen gleiche Merkmale.

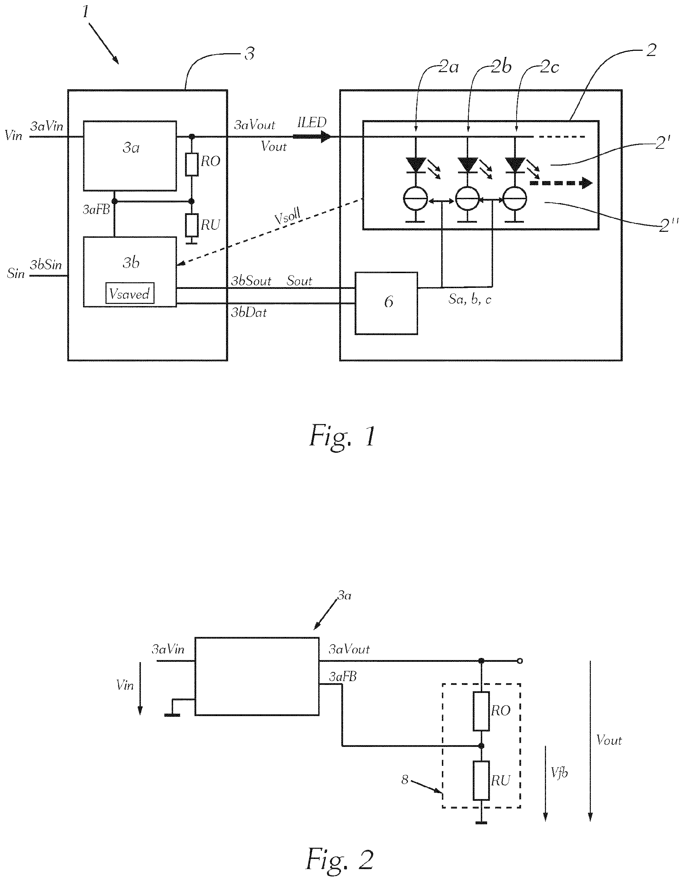

Figur 1 zeigt eine Darstellung einer beispielhaften Ausführungsform einer erfindungsgemäßen Leuchtvorrichtung 1. Die Leuchtvorrichtung 1 umfasst einen Multi-LED-Chip 2, wobei der Multi-LED-Chip 2 eine Anzahl an LED-Lichtquellen 2' sowie eine Anzahl an Regelelementen 2" aufweist, wobei jeder LED-Lichtquelle 2' ein in Serie geschaltetes Regelelement 2" zur Regelung der Stromaufnahme der jeweiligen LED-Lichtquelle 2' zugeordnet ist und gemeinsam mit dem Regelelement 2" einen regelbaren Strang 2a, 2b, 2c bildet. Jede LED-Lichtquelle 2' ist einzeln schaltbar ausgebildet. Auf diese Weise lassen sich komplexe Lichtbilder erzeugen. In der Darstellung nach Fig. 1 sind nur drei Stränge explizit dargestellt. Es versteht sich von selbst, dass diese Anzahl grundsätzlich beliebig variierbar ist und von einer Fachperson passend zu dem jeweiligen Einsatzzweck der Leuchtvorrichtung entsprechend gewählt werden kann.

Weiters umfasst die Leuchtvorrichtung 1 eine elektrische Steuereinheit 3. Die Steuereinheit 3 umfasst wiederum einen Abwärtswandler 3a mit einem Spannungseingang 3aVin, einem Feedbackeingang 3aFB sowie einem Spannungsausgang 3aVout. Weiters umfasst die Steuereinheit 3 einen Mikrokontroller 3b mit einem Signaleingang 3bSin und einem Signalausgang 3bSout.

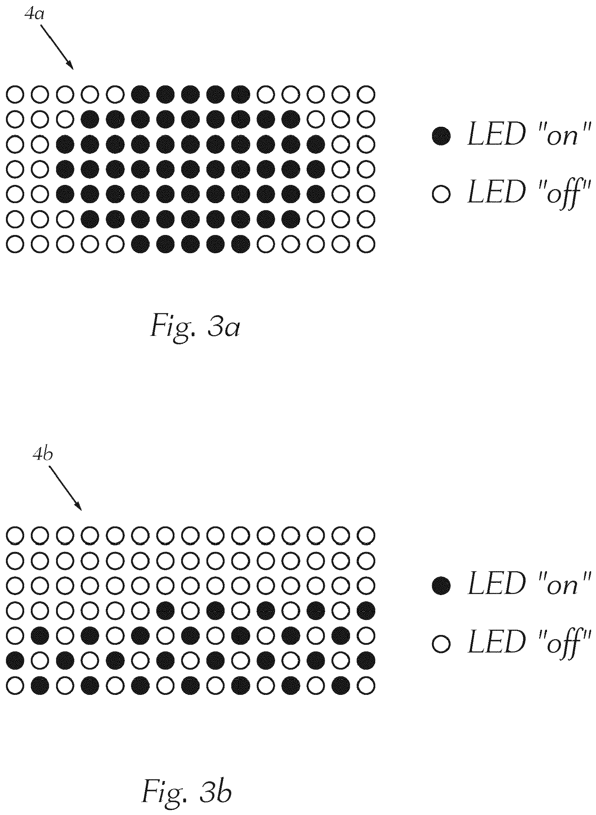

Der Abwärtswandler 3a ist dazu eingerichtet, eine an dem Spannungseingang 3aVin anliegende Eingangsgleichspannung Vin in eine niedrigere Ausgangsgleichspannung Vout umzuwandeln und über den Spannungsausgang 3aVout auszugeben. Ein Beispiel eines solchen Abwärtswandlers ist in Fig. 2 dargestellt. Mit Blick auf Fig. 1 sei weiters erwähnt, dass der Spannungsausgang 3aVout zur elektrischen Versorgung der Stränge 2a, 2b, 2c des Multi-LED-Chips 2 mit dem Multi-LED-Chip 2 verbunden ist, wobei der Spannungswert der Ausgangsgleichspannung Vout durch eine Feedbackschleife festgelegt wird, bei der ein Spannungsanteil Vfb der Ausgangsgleichspannung Vout an den Feedbackeingang 3aFB rückgeführt wird und sich die Ausgangsgleichspannung Vout in Abhängigkeit von dem rückgeführten Spannungsanteil Vfb einstellt. Der Mikrokontroller 3b ist dazu eingerichtet, über den Signaleingang 3bSin ein Eingangssignal Sin zu empfangen und in ein Ausgangssignal Sout umzuwandeln. Das Eingangssignal Sin kann z.B. von der Steuerung dem Kommunikationsbus eines Fahrzeuges kommend in die Steuereinheit 3 eingehen. Das Ausgangssignal Sout wird herangezogen, um das das durch den Multi-LED-Chip 2 abzustrahlende Lichtbild 4a, 4b vorzugeben, wobei jedes abzustrahlende Lichtbild 4a, 4b mit einer Konfiguration an Regelzuständen der Stränge 2a, 2b, 2c korreliert und wobei der Signalausgang 3bSout zur Übertragung des Ausgangssignals Sout mit dem Multi-LED-Chip 2 verbunden ist. Zur Signalübertragung können unterschiedliche Kommunikationssysteme wie z.B. Bus-Systeme, insbesondere CAN, GMSL und/oder LVDS eingesetzt werden. Weiters ist eine Datenschnittstelle 3bDat vorgesehen, um beispielsweise Einstellungen am Multi-LED-Chip 2 vorzunehmen oder Zustandsparameter auszulesen. Diese Datenschnittstelle kann beispielsweise eine UART, SPI oder I2C Schnittstelle umfassen. Die Zustandsparameter können beispielsweise Temperaturparameter oder Leistungsparameter umfassen. Die Datenschnittstelle 3bDat erlaubt vorteilhafterweise bidirektionale Datenkommunikation, womit Daten vom Mikrokontroller an den Multi-LED-Chip 2 direkt oder indirekt über den später beschriebenen Schaltkreis 6 übertragen werden können. Der Multi-LED-Chip 2 ist weiters dazu eingerichtet, für jedes Lichtbild 4a, 4b (siehe Fig. 3a und 3b) die dazu passenden Regelzustände der Stränge 2a, 2b, 2c abzuleiten und dabei zwischen zu aktivierenden und nicht zu aktivierenden Strängen 2a, 2b, 2c zu unterscheiden, aus den für jedes Lichtbild 4a, 4b abgeleiteten Regelzuständen unter Berücksichtigung der Spannungsverluste der Regelelemente 2" für jeden zu aktivierenden Strang 2a, 2b, 2c eine erforderliche Mindestbetriebsspannung Vmin2a, Vmin2b, Vmin2c zu berechnen und durch Vergleich der Mindestbetriebsspannungen Vmin2a, Vmin2b, Vmin2c der zu aktivierenden Stränge 2a, 2b, 2c für jedes Lichtbild 4a, 4b die höchste Mindestbetriebsspannung zu ermitteln.

Die erforderliche Mindestbetriebsspannung eines einzelnen Stranges kann beispielsweise anhand einer Spannungsmessung in einem Teilbereich des Stranges berechnet werden. Der Teilbereich kann beispielsweise die LED-Lichtquelle 2' selbst oder das zugeordnete Regelelement 2" umfassen.

Diese höchste Mindestbetriebsspannung kann wiederum als Sollbetriebsspannung Vsoll für das betreffende Lichtbild festgelegt und an den Mikrokontroller 3b kommuniziert werden, der wiederum dafür sorgt, dass die Ausgangsspannung Vout diese Sollbetriebsspannung annimmt. Hierfür ist der Mikrokontroller 3b dazu eingerichtet, in Abhängigkeit von der durch den Multi-LED-Chip 2 kommunizierten Sollbetriebsspannung Vsoll die Spannungsrückfuhr des Spannungsanteils Vfb in den Feedbackeingang 3aFB dergestalt zu manipulieren, dass lediglich die Sollbetriebsspannung Vsoll als Ausgangsspannung Vout an den Spannungsausgang 3aVout ausgegeben wird. Auf diese Weise kann vermieden werden, dass an überhöhte Spannungswerte an den Regelelementen 2" verbraucht werden müssen. Die Leuchtvorrichtung weist dadurch eine erhöhte Effizienz auf. Vsoll kann dabei vom Multi-LED-Chip 2 an den Mikrokontroller 3b über eine gesonderte Leitung übermittelt werden oder über die Datenschnittstelle 3bDat. Es ist möglich, dass der Mikrokontroller 3b die Sollbetriebsspannung Vsoll anfragt und damit die Ermittlung der höchsten Mindestbetriebsspannung triggert. Dies kann in regelmäßigen Zeitabständen passieren oder vorteilhafterweise immer nach oder gleichzeitig mit der Vorgabe eines neuen abzustrahlenden Lichtbildes 4a, 4b.

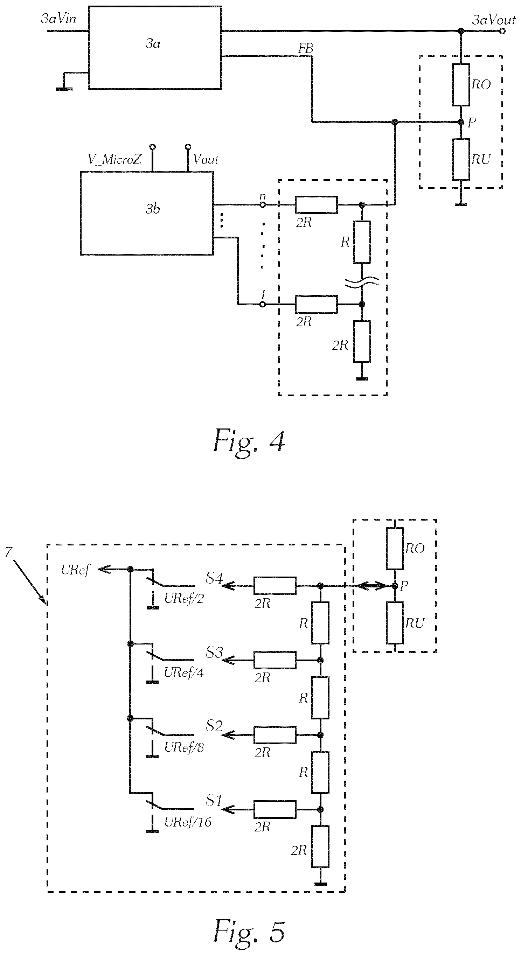

Fig. 3a und 3b zeigen beispielhafte Lichtbilder, die durch eine Ausführungsform der erfindungsgemäßen Leuchtvorrichtung 1 erzeugbar sind. Dabei weist die Leuchtvorrichtung 1 eine Anzahl von 105 Strängen auf, die in einer Matrix umfassend sieben Zeilen und fünfzehn Spalten angeordnet sind. Die Auflösung beträgt 7x15 und die Anzahl der "Pixel" der Lichtbilder beträgt 105. Fig. 3a zeigt dabei unterschiedliche Lichtverteilungen. In beiden Lichtbildern sind nicht sämtliche LED-Lichtquellen 2' bzw. Stränge eingeschaltet. Für unterschiedliche Lichtbilder ergeben sich in der Regel unterschiedliche Sollbetriebsspannungen. Grund dafür sind beispielsweise Temperaturunterschiede oder Fertigungstoleranzen innerhalb der Anzahl an LED-Lichtquellen 2' des Multi-LED-Chips 2. Fig. 4 zeigt eine beispielhafte Ausführungsform der Erfindung mit einem R2R-Netzwerk. Der Mikrokontroller 3b ist zur Manipulation der Spannungsrückfuhr des Spannungsanteils Vfb in den Feedbackeingang 3aFB mit einem durch den Mikrokontroller 3b schaltbaren Widerstandsnetzwerk 5 verbunden, wobei das schaltbare Widerstandsnetzwerk 5 mit dem Feedbackeingang 3aFB und somit mit der Spannungsrückfuhr des Spannungsanteils Vfb verbunden ist. Das Widerstandsnetzwerk 7 ist dabei als R2R-Netzwerk ausgebildet.

Auch kann das Widerstandsnetzwerk aus einer Mehrzahl an Widerständen ausgebildet sein, die zueinander und zum Widerstand RU parallelgeschaltet sind, wobei jedem der Widerstände und auch dem Widerstand RU ein elektronischer Schalter, beispielsweise ein Schalttransistor zugeordnet sein kann, welcher den jeweiligen Widerstand im Widerstandsnetzwerk aktivieren oder deaktivieren kann. Wird ein Widerstand oder werden mehrere Widerstände durch den jeweils zugeordneten Schalttransistor deaktiviert, so wird die Spannungsrückfuhr des Spannungsanteils Vfb manipuliert. Die der Mehrzahl an Widerständen zugeordneten Schalttransistoren können dabei vom Mikrokontroller 3b gesteuert werden.

Alternativ kann der Mikrokontroller zur Manipulation der Spannungsrückfuhr des Spannungsanteils in den Feedbackeingang mit einem einstellbaren Widerstand verbunden sein, wobei der einstellbare Widerstand mit dem Feedbackeingang und somit mit der Spannungsrückfuhr des Spannungsanteils verbunden ist. Ein solcher einstellbarer Widerstand ist vorteilhafterweise als Transistor ausgebildet, der mit dem Mikrokontroller verbunden ist, sodass der Widerstandswert des Transistors über den Mikrokontroller einstellbar ist. Der einstellbare Widerstand kann dabei an Stelle des Widerstandes RU eingesetzt werden.

Fig. 5 zeigt eine detaillierte Darstellung eines R2R-Netzwerks mit vier Schaltstufen, inkl. Andeutung einer Anbindung an die Ausführungsform gemäß Fig. 4. Das R2R-Netzwerk weist dabei vier Schaltstufen S1, S2, S3, S4 auf, die jeweils mit dem Mikrokontroller 3b zur Steuerung der Schaltstufen S1, S2, S3, S4 verbunden sind, wobei das Widerstandsnetzwerk an dem Widerstand RU angreift und gegen Masse sowie gegen eine Referenzspannung URef geschaltet ist.

Auf die technische Funktion eines solchen Widerstandsnetzwerks soll hier nicht näher eingegangen werden. Diese ist der Fachperson hinreichend bekannt. Der Mikrokontroller 3b legt über push-pull-Anschlüsse die Anschlüsse (BitO -Bit3 bzw. S1 bis S4) des R2R-Netzwerks selektiv auf z.B. +5V oder auf GND - und koppelt die Ausgangsspannung dann auf RU ein.

Durch Kombinationen der Schalterstellungen S1 bis S4 lassen sich insgesamt 16 verschiedene Zustände herbeiführen, die auf den Abwärtswandler 3a über den Feedbackbereich FB rückgekoppelt werden können. Die Ausgangsspannung Vout lässt sich daher in 16 Stufen durch ein solches Widerstandsnetzwerk nach Fig. 5 manipulieren.

Die Ausgangsspannung Vout bzw. ein Anteil davon ist über einen Spannungsteiler 8 zu dem Feedbackeingang 3aVin rückgeführt. Der Spannungsteiler 8 ist gegen Masse geschaltet und das Widerstandsnetzwerk 7 an dem Knotenpunkt P (siehe Fig. 4) zwischen den Widerständen RO, und RU des Spannungsteilers 8 angreift und ebenso gegen Masse geschaltet ist.

Die Leuchtvorrichtung 1 weist gemäß Fig. 1 vorzugsweise weiters einen anwendungsspezifischen integrierten Schaltkreis (z.B. ASIC oder FPGA) 6 auf, wobei dieser Schaltkreis 6 mit dem Signalausgang 3bSout des Mikrokontrollers 3b verbunden ist und zur Umwandlung des Ausgangssignals Sout in Steuersignale Sa,b,c zur Ansteuerung der LED-Lichtquellen des Multi-LED-Chips 2 eingerichtet ist.

Die Ausgangsspannung Vout kann z.B. zwischen 3V und 5V, insbesondere zwischen 3,5V und 4,5V, betragen.

Vorteilhafterweise kann vorgesehen sein, dass das Eingangssignal Sin Information über aktuelle sowie über das nachfolgend abzustrahlende Lichtbild 4a, 4b enthält und basierend darauf vorab die zugehörige Sollbetriebsspannung Vsoll des nachfolgenden Lichtbilds 4a, 4b abgeleitet wird, um durch den Mikrokontroller 3b bereits unmittelbar zu dem Zeitpunkt des Wechsels auf das nachfolgende Lichtbild 4a, 4b die diesem Lichtbild 4a, 4b passende Sollbetriebsspannung Vsoll vorzugeben. Dadurch können zeitliche Delays minimiert werden, insbesondere etwaig erforderliche Nachregelungen in der Abstrahlung, wenn z.B. das nachfolgende Lichtbild eine höhere Sollbetriebsspannung Vsoll verlangt und im Übergang ansonsten noch kurzfristig noch die zu geringe Sollbetriebsspannung Vsoll des vorhergehenden Lichtbilds anliegen würde, bis die höhere Sollbetriebsspannung eingestellt wird.

Weiters kann vorgesehen sein, dass der Mikrokontroller 3b dazu eingerichtet ist, die für wiederkehrende Lichtbilder 4a, 4b durch den Multi-LED-Chip 2 vorgegebenen Sollspannungswerte Vsoll abzuspeichern und den zu einer Vorgabe eines Lichtbildes 4a, 4b entsprechenden abgespeicherten Sollspannungswert Vsaved (siehe Fig. 1) vorab einzustellen und beizubehalten, bis ein anderes Lichtbild 4a, 4b vorgegeben wird oder durch den Multi-LED-Chip 2 ein von den abgespeicherten Sollspannungswert Vsaved abweichender Sollspannungswert Vsoll für das betreffende Lichtbild 4a, 4b ausgegeben wird.

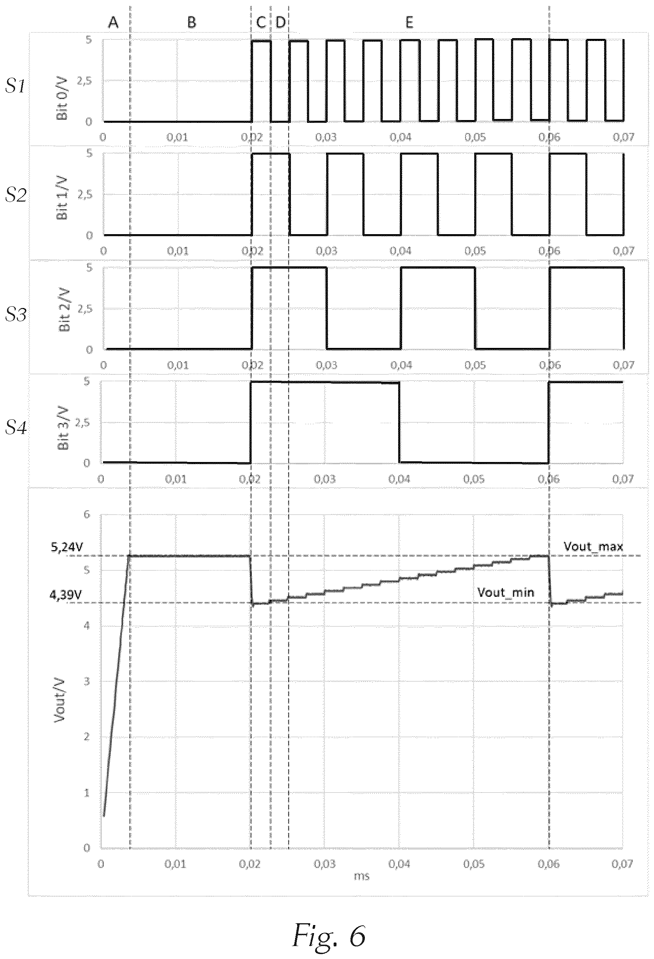

Figur 6 zeigt beispielhafte Ausgangsspannungen für unterschiedliche Schaltzustände der Schaltstufen S1 bis S4 gemäß Fig. 5. In der Zeitperiode C ist das R2R-Netzwerk in Betrieb, wobei sämtliche Schalter S1 bis S4 aktiv sind und dadurch die Spannungswerte gemessen an den Schalteingängen S1 bis S4 jeweils den Spannungswert von URef, vorliegend z.B. 5V, betragen. Auf diese Weise wird das Potenzial des Knotenpunkts P (siehe Fig. 4) maximal angehoben. Durch die Verschaltung der Rückkopplung in den Feedbackeingang FB nimmt die Ausgangsspannung Vout dabei ein Minimum an und beträgt 4,39 V. In der Zeitperiode D wird das Schalter S1 deaktiviert, der das niederwertigstes Bit (auch als Bit 0 bezeichnet) repräsentiert. Dem Knotenpunkt P (siehe Fig. 4) Spannung steigt dadurch um den geringstmöglichen Spannungssprung an. In der Zeitperiode E werden sämtliche der verbleibenden Schaltkombinationen durchgespielt, bis zum Ende der Zeitperiode E sämtliche Schalter S1 bis S4 ausgeschaltet sind. Die höchste Ausgangsspannung in Form der 5,24 V wird dabei erreicht.

Die Erfindung umfasst zudem einen Kraftfahrzeugscheinwerfer mit zumindest einer erfindungsgemäßen Leuchtvorrichtung 1. Weiters umfasst die Erfindung ein Kraftfahrzeug mit zumindest einer erfindungsgemäßen Leuchtvorrichtung 1 und/oder zumindest einem erfindungsgemäßen Kraftfahrzeugscheinwerfer.

Weiters betrifft die Erfindung ein Verfahren zum energieeffizienten Betrieb einer Leuchtvorrichtung 1, insbesondere einer Leuchtvorrichtung der zuvor genannten Art, die Leuchtvorrichtung 1 umfassend einen Multi-LED-Chip 2, wobei der Multi-LED-Chip 2 eine Anzahl an LED-Lichtquellen 2' sowie eine Anzahl an Regelelementen 2" aufweist, wobei jeder LED-Lichtquelle 2' ein in Serie geschaltetes Regelelement 2" zur Regelung der Stromaufnahme der jeweiligen LED-Lichtquelle 2' zugeordnet ist und gemeinsam mit dem Regelelement 2" einen regelbaren Strang 2a, 2b, 2c bildet, wobei jede LED-Lichtquelle 2' einzeln schaltbar ausgebildet ist, eine elektrische Steuereinheit 3, die einen Abwärtswandler 3a mit einem Spannungseingang 3aVin, einem Feedbackeingang 3aFB sowie einem Spannungsausgang 3aVout sowie einen Mikrokontroller 3b mit einem Signaleingang 3bSin und einem Signalausgang 3bSout aufweist, wobei der Abwärtswandler 3a dazu eingerichtet ist, eine an dem Spannungseingang 3aVin anliegende Eingangsgleichspannung Vin in eine niedrigere Ausgangsgleichspannung Vout umzuwandeln und über den Spannungsausgang 3aVout auszugeben, wobei der Spannungsausgang 3aVout zur elektrischen Versorgung der Stränge 2a, 2b, 2c des Multi-LED-Chips 2 mit dem Multi-LED-Chip 2 verbunden ist, wobei der Spannungswert der Ausgangsgleichspannung Vout durch eine Feedbackschleife festgelegt wird, bei der ein Spannungsanteil Vfb der Ausgangsgleichspannung Vout an den Feedbackeingang 3aFB rückgeführt wird und sich die Ausgangsgleichspannung Vout in Abhängigkeit von dem rückgeführten Spannungsanteil Vfb einstellt, wobei der Mikrokontroller 3b dazu eingerichtet ist, über den Signaleingang 3bSin ein Eingangssignal Sin zu empfangen und in ein Ausgangssignal Sout umzuwandeln, mit welchem Ausgangssignal Sout das durch den Multi-LED-Chip 2 abzustrahlende Lichtbild 4a, 4b vorgebbar ist, wobei jedes abzustrahlende Lichtbild 4a, 4b mit einer Konfiguration an Regelzuständen der Stränge 2a, 2b, 2c korreliert und wobei der Signalausgang 3bSout zur Übertragung des Ausgangssignals Sout mit dem Multi-LED-Chip 2 verbunden ist.

Das Verfahren umfasst die folgenden Schritte: a) Empfang eines Ausgangssignals Sout durch den Multi-LED-Chip 2, b) Ableiten des jeweilig abzustrahlenden Lichtbildes 4a, 4b aus dem Ausgangssignal Sout und Berechnen der dazu passenden Regelzustände der Stränge 2a, 2b, 2c, c) Berechnen auf Basis der in Schritt b ermittelten Regelzustände einer für jeden Strang 2a, 2b, 2c erforderlichen Mindestbetriebsspannung Vmin2a, Vmin2b, Vmin2c unter Berücksichtigung der Spannungsverluste der Regelelemente 2", d) Ermitteln der Sollbetriebsspannung Vsoll durch Feststellen der höchsten der Mindestbetriebsspannungen Vmin2a, Vmin2b, Vmin2c der Stränge 2a, 2b, 2c, e) Kommunizieren der Sollbetriebsspannung Vsoll an den Mikrokontroller 3b, f) Manipulieren der Spannungsrückfuhr des Spannungsanteils Vfb in den Feedbackeingang 3aFB durch den Mikrokontroller 3b in Abhängigkeit von der kommunizierten Sollbetriebsspannung Vsoll, sodass lediglich die Sollbetriebsspannung Vsoll als Ausgangsspannung Vout an den Spannungsausgang 3aVout ausgegeben wird.

Die Erfindung ist nicht auf die gezeigten Ausführungsformen beschränkt, sondern durch den gesamten Schutzumfang der Ansprüche definiert. Auch können einzelne Aspekte der Erfindung bzw. der Ausführungsformen aufgegriffen und miteinander kombiniert werden.

Etwaige Bezugszeichen in den Ansprüchen sind beispielhaft und dienen nur der einfacheren Lesbarkeit der Ansprüche, ohne diese einzuschränken.

## Patentansprüche

1. Leuchtvorrichtung (1), umfassend
- einen Multi-LED-Chip (2), wobei der Multi-LED-Chip (2) eine Anzahl an LED-Lichtquellen (2') sowie eine Anzahl an Regelelementen (2") aufweist, wobei jeder LED-Lichtquelle (2') ein in Serie geschaltetes Regelelement (2") zur Regelung der Stromaufnahme der jeweiligen LED-Lichtquelle (2') zugeordnet ist und gemeinsam mit dem Regelelement (2") einen regelbaren Strang (2a, 2b, 2c) bildet, wobei jede LED-Lichtquelle (2') einzeln schaltbar ausgebildet ist,
- eine elektrische Steuereinheit (3), die
*einen Abwärtswandler (3a) mit einem Spannungseingang (3aVin), einem Feedbackeingang (3aFB) sowie einem Spannungsausgang (3aVout) sowie
*einen Mikrokontroller (3b) mit einem Signaleingang (3bSin) und einem Signalausgang (3bSout) aufweist,
wobei der Abwärtswandler (3a) dazu eingerichtet ist, eine an dem Spannungseingang (3aVin) anliegende Eingangsgleichspannung (Vin) in eine niedrigere Ausgangsgleichspannung (Vout) umzuwandeln und über den Spannungsausgang (3aVout) auszugeben, wobei der Spannungsausgang (3aVout) zur elektrischen Versorgung der Stränge (2a, 2b, 2c) des Multi-LED-Chips (2) mit dem Multi-LED-Chip (2) verbunden ist, wobei der Spannungswert der Ausgangsgleichspannung (Vout) durch eine Feedbackschleife festgelegt wird, bei der ein Spannungsanteil (Vfb) der Ausgangsgleichspannung (Vout) an den Feedbackeingang (3aFB) rückgeführt wird und sich die Ausgangsgleichspannung (Vout) in Abhängigkeit von dem rückgeführten Spannungsanteil (Vfb) einstellt,
wobei der Mikrokontroller (3b) dazu eingerichtet ist, über den Signaleingang (3bSin) ein Eingangssignal (Sin) zu empfangen und in ein Ausgangssignal (Sout) umzuwandeln, mit welchem Ausgangssignal (Sout) das durch den Multi-LED-Chip (2) abzustrahlende Lichtbild (4a, 4b) vorgebbar ist, wobei jedes abzustrahlende Lichtbild (4a, 4b) mit einer Konfiguration an Regelzuständen der Stränge (2a, 2b, 2c) korreliert und wobei der Signalausgang (3bSout) zur Übertragung des Ausgangssignals (Sout) mit dem Multi-LED-Chip (2) verbunden ist,
**dadurch gekennzeichnet, dass**
der Multi-LED-Chip (2) weiters dazu eingerichtet ist, für jedes Lichtbild (4a, 4b) die dazu passenden Regelzustände der Stränge (2a, 2b, 2c) abzuleiten und dabei zwischen zu aktivierenden und nicht zu aktivierenden Strängen (2a, 2b, 2c) zu unterscheiden, aus den für jedes Lichtbild (4a, 4b) abgeleiteten Regelzuständen unter Berücksichtigung der Spannungsverluste der Regelelemente (2") für jeden zu aktivierenden Strang (2a, 2b, 2c) eine erforderliche Mindestbetriebsspannung (Vmin2a, Vmin2b, Vmin2c) zu berechnen und durch Vergleich der Mindestbetriebsspannungen (Vmin2a, Vmin2b, Vmin2c) der zu aktivierenden Stränge (2a, 2b, 2c) für jedes Lichtbild (4a, 4b) die höchste Mindestbetriebsspannung zu ermitteln und als Sollbetriebsspannung (Vsoll) für das betreffende Lichtbild (4a, 4b) festzulegen und diese Sollbetriebsspannung (Vsoll) an den Mikrokontroller (3b) zu kommunizieren, wobei der Mikrokontroller (3b) dazu eingerichtet ist, in Abhängigkeit von der durch den Multi-LED-Chip (2) kommunizierten Sollbetriebsspannung (Vsoll) die Spannungsrückfuhr des Spannungsanteils (Vfb) in den Feedbackeingang (3aFB) dergestalt zu manipulieren, dass lediglich die Sollbetriebsspannung (Vsoll) als Ausgangsspannung (Vout) an den Spannungsausgang (3aVout) ausgegeben wird.

2. Leuchtvorrichtung nach Anspruch 1, wobei der Mikrokontroller (3b) zur Manipulation der Spannungsrückfuhr des Spannungsanteils (Vfb) in den Feedbackeingang (3aFB) mit einem durch den Mikrokontroller (3b) schaltbaren Widerstandsnetzwerk (5) verbunden ist, wobei das schaltbare Widerstandsnetzwerk (5) mit dem Feedbackeingang (3aFB) und somit mit der Spannungsrückfuhr des Spannungsanteils (Vfb) verbunden ist.

3. Leuchtvorrichtung (1) nach Anspruch 2, wobei das Widerstandsnetzwerk (7) als R2R-Netzwerk ausgebildet ist.

4. Leuchtvorrichtung (1) nach Anspruch 3, wobei das R2R-Netzwerk vier Schaltstufen (S1, S2, S3, S4) aufweist, die jeweils mit dem Mikrokontroller (3b) zur Steuerung der Schaltstufen (S1, S2, S3, S4) verbunden sind.

5. Leuchtvorrichtung (1) nach einem der vorhergehenden Ansprüche, wobei die Ausgangsspannung (Vout) über einen Spannungsteiler (8) zu dem Feedbackeingang (3aVin) rückgeführt ist.

6. Leuchtvorrichtung (1) nach Anspruch 5, wobei der Spannungsteiler (8) gegen Masse geschaltet ist und das Widerstandsnetzwerk (7) an einem Knotenpunkt (P) zwischen den Widerständen (RO, RU) des Spannungsteilers (8) angreift und ebenso gegen Masse geschaltet ist.

7. Leuchtvorrichtung (1) nach einem der vorhergehenden Ansprüche, wobei die Leuchtvorrichtung (1) weiters einen anwendungsspezifischen IC (6) aufweist, wobei dieser anwendungsspezifische IC (6) mit dem Signalausgang (3bSout) des Mikrokontrollers (3b) verbunden ist und zur Umwandlung des Ausgangssignals (Sout) in Steuersignale (Sa,b,c) zur Ansteuerung der LED-Lichtquellen des Multi-LED-Chips (2) eingerichtet ist.

8. Leuchtvorrichtung (1) nach einem der vorhergehenden Ansprüche, wobei die Ausgangsspannung (Vout) zwischen 3V und 5V, insbesondere zwischen 3,5V und 4,5V, beträgt.

9. Leuchtvorrichtung (1) nach einem der vorhergehenden Ansprüche, wobei das Eingangssignal (Sin) Information über aktuelle sowie über das nachfolgend abzustrahlende Lichtbild (4a, 4b) enthält und basierend darauf vorab die zugehörige Sollbetriebsspannung (Vsoll) des nachfolgenden Lichtbilds (4a, 4b) abgeleitet wird, um durch den Mikrokontroller (3b) bereits unmittelbar zu dem Zeitpunkt des Wechsels auf das nachfolgende Lichtbild (4a, 4b) die diesem Lichtbild (4a, 4b) passende Sollbetriebsspannung (Vsoll) vorzugeben.

10. Leuchtvorrichtung (1) nach einem der vorhergehenden Ansprüche, wobei der Mikrokontroller (3b) dazu eingerichtet ist, die für wiederkehrende Lichtbilder (4a, 4b) durch den Multi-LED-Chip (2) vorgegebenen Sollspannungswerte (Vsoll) abzuspeichern und den zu einer Vorgabe eines Lichtbildes (4a, 4b) entsprechenden abgespeicherten Sollspannungswert (Vsaved) vorab einzustellen und beizubehalten, bis ein anderes Lichtbild (4a, 4b) vorgegeben wird oder durch den Multi-LED-Chip (2) ein von den abgespeicherten Sollspannungswert (Vsaved) abweichender Sollspannungswert (Vsoll) für das betreffende Lichtbild (4a, 4b) ausgegeben wird.

11. Kraftfahrzeugscheinwerfer, umfassend eine Leuchtvorrichtung (1) nach einem der vorhergehenden Ansprüche.

12. Kraftfahrzeug, umfassend eine Leuchtvorrichtung (1) nach einem der Ansprüche 1 bis 10 und/oder einen Kraftfahrzeugscheinwerfer nach Anspruch 11.

13. Verfahren zum energieeffizienten Betrieb einer Leuchtvorrichtung (1), die Leuchtvorrichtung (1) umfassend
- einen Multi-LED-Chip (2), wobei der Multi-LED-Chip (2) eine Anzahl an LED-Lichtquellen (2') sowie eine Anzahl an Regelelementen (2") aufweist, wobei jeder LED-Lichtquelle (2') ein in Serie geschaltetes Regelelement (2") zur Regelung der Stromaufnahme der jeweiligen LED-Lichtquelle (2') zugeordnet ist und gemeinsam mit dem Regelelement (2") einen regelbaren Strang (2a, 2b, 2c) bildet, wobei jede LED-Lichtquelle (2') einzeln schaltbar ausgebildet ist,
- eine elektrische Steuereinheit (3), die
*einen Abwärtswandler (3a) mit einem Spannungseingang (3aVin), einem Feedbackeingang (3aFB) sowie einem Spannungsausgang (3aVout) sowie
*einen Mikrokontroller (3b) mit einem Signaleingang (3bSin) und einem Signalausgang (3bSout) aufweist,
wobei der Abwärtswandler (3a) dazu eingerichtet ist, eine an dem Spannungseingang (3aVin) anliegende Eingangsgleichspannung (Vin) in eine niedrigere Ausgangsgleichspannung (Vout) umzuwandeln und über den Spannungsausgang (3aVout) auszugeben, wobei der Spannungsausgang (3aVout) zur elektrischen Versorgung der Stränge (2a, 2b, 2c) des Multi-LED-Chips (2) mit dem Multi-LED-Chip (2) verbunden ist, wobei der Spannungswert der Ausgangsgleichspannung (Vout) durch eine Feedbackschleife festgelegt wird, bei der ein Spannungsanteil (Vfb) der Ausgangsgleichspannung (Vout) an den Feedbackeingang (3aFB) rückgeführt wird und sich die Ausgangsgleichspannung (Vout) in Abhängigkeit von dem rückgeführten Spannungsanteil (Vfb) einstellt,
wobei der Mikrokontroller (3b) dazu eingerichtet ist, über den Signaleingang (3bSin) ein Eingangssignal (Sin) zu empfangen und in ein Ausgangssignal (Sout) umzuwandeln, mit welchem Ausgangssignal (Sout) das durch den Multi-LED-Chip (2) abzustrahlende Lichtbild (4a, 4b) vorgebbar ist, wobei jedes abzustrahlende Lichtbild (4a, 4b) mit einer Konfiguration an Regelzuständen der Stränge (2a, 2b, 2c) korreliert und wobei der Signalausgang (3bSout) zur Übertragung des Ausgangssignals (Sout) mit dem Multi-LED-Chip (2) verbunden ist,
wobei das Verfahren die folgenden Schritte umfasst:
a) Empfang eines Ausgangssignals (Sout) durch den Multi-LED-Chip (2),
b) Ableiten des jeweilig abzustrahlenden Lichtbildes (4a, 4b) aus dem Ausgangssignal (Sout) und Berechnen der dazu passenden Regelzustände der Stränge (2a, 2b, 2c),
c) Berechnen auf Basis der in Schritt b) ermittelten Regelzustände einer für jeden Strang (2a, 2b, 2c) erforderlichen Mindestbetriebsspannung (Vmin2a, Vmin2b, Vmin2c) unter Berücksichtigung der Spannungsverluste der Regelelemente (2"),
d) Ermitteln der Sollbetriebsspannung (Vsoll) durch Feststellen der höchsten der Mindestbetriebsspannungen (Vmin2a, Vmin2b, Vmin2c) der Stränge (2a, 2b, 2c),
e) Kommunizieren der Sollbetriebsspannung (Vsoll) an den Mikrokontroller (3b),
f) Manipulieren der Spannungsrückfuhr des Spannungsanteils (Vfb) in den Feedbackeingang (3aFB) durch den Mikrokontroller (3b) in Abhängigkeit von der kommunizierten Sollbetriebsspannung (Vsoll), sodass lediglich die Sollbetriebsspannung (Vsoll) als Ausgangsspannung (Vout) an den Spannungsausgang (3aVout) ausgegeben wird.
